Europäisches Patentamt

European Patent Office

Office européen des brevets

(11) Numéro de publication: **0 088 001**
**B1**

(12) **FASCICULE DE BREVET EUROPEEN**

(45) Date de publication du fascicule du brevet:
30.04.86

(21) Numéro de dépôt: 83400327.9

(22) Date de dépôt: 16.02.83

(51) Int. Cl.⁴: **G 02 B 13/00**, G 02 B 23/22,
G 02 B 25/04

(54) **Objectif, notamment pour appareil de prise de vue propre à une surveillance terrestre ou subaquatique.**

(30) Priorité: **19.02.82 FR 8202803**

(43) Date de publication de la demande:
**07.09.83 Bulletin 83/36**

(45) Mention de la délivrance du brevet:
**30.04.86 Bulletin 86/18**

(84) Etats contractants désignés:
**BE CH DE GB IT LI NL**

(56) Documents cités:
**CH - A - 271 419**
**FR - A - 1 533 571**
**FR - A - 2 321 713**
**US - A - 3 485 547**

(73) Titulaire: **Defuans, Jean-Louis, 9 Avenue du Bourcet,
F-38240 Meylan (FR)**

(72) Inventeur: **Defuans, Jean-Louis, 9 Avenue du Bourcet,
F-38240 Meylan (FR)**

(74) Mandataire: **CABINET BONNET-THIRION, 95 Boulevard
Beaumarchais, F-75003 Paris (FR)**

LIBER, STOCKHOLM 1986

## Description

Dans le brevet français déposé le 22 Août 1975 sous le N° 75 26348 et publié sous le N° 2.321.713, il a été déc un appareil de prise de vue dont la caractéristique essentielle est que la pupille d'entrée de son objectif, c'est-à-dire le diaphragme de cet objectif qui en limite le faisceau entrant et en conditionne donc le nombre d'ouverture, est située en avant de cet objectif.

Il est apparu que cette disposition, initialement prévue pour faciliter et rendre plus simple la réalisation pratiq d'appareils de prise de vue photographiques sousmarins, pouvait avantageusement s'appliquer aux appareils d prise de vue à mettre en oeuvre pour assurer discrètement une quelconque surveillance, qu'il s'agisse d'appare de prise de vue photographiques, de caméras cinématographiques ou de caméras vidéo, ou qu'il s'agisse d'une surveillance à exercer en milieu aérien, dans un quelconque local, ou en milieu subaquatique, dans un quelconque bassin, pour le contrôle des tiers venant à évoluer dans un tel milieu.

En effet, la condition du succès de toute surveillance est que l'appareil de prise de vue au moyen duquel elle exercée soit aussi bien que possible dissimulé à la vue.

Si, comme il est usuel, la pupille d'entrée est disposée au sein même de l'objectif, les lentilles d'entrée de celui-ci ont nécessairement un diamètre relativement important, qui en rend malaisée la dissimulation.

Il n'en est pas de même si, comme décrit dans le brevet français mentionné ci-dessus, la pupille d'entrée de l'objectif est située en avant de celui-ci.

Les lentilles d'entrée de l'objectif peuvent en effet dès lors avoir un diamètre relativement petit, et l'appareil d prise de vue correspondant être ainsi aisément dissimulé derrière une cloison ou une porte de placard, ou dans un quelconque support approprié, dont, en façade, un simple trou de faible diamètre, peu visible des tiers, constitue la pupille d'entrée de l'objectif de l'appareil de prise de vue ainsi dissimulé.

Mais, en pratique, outre cette capacité de dissimulation, il est souhaitable, pour un domaine d'application aus large que possible, que d'autres contraintes soient également respectées.

Tout d'abord, comme mentionné ci-dessus, il est souhaitable que l'objectif puisse indifféremment convenir à fonctionnement en milieu aérien ou en milieu aquatique.

En outre, il est souhaitable qu'il conduise à un tirage mécanique, c'est-à-dire à une distance libre entre lui et l plan image correspondant, relativement important, pour permettre l'implantation, le cas échéant, d'un quelconq accessoire, tel que obturateur, miroir reflex ou filtre par exemple.

Ces exigences sont contradictoires, et elles sont en pratique difficiles à concilier.

Dans le brevet français mentionné ci-dessus, notamment, l'objectif décrit ne convient en pratique qu'à des prises de vues sous-marines, et il conduit à un tirage mécanique relativement petit.

La présente invention a pour objet un objectif répondant au contraire de manière particulièrement satisfaisar aux exigences en question, cet objectif étant du genre comportant un diaphragme, ou pupille d'entrée, à l'avant et un ensemble optique à l'arrière de ladite pupille d'entrée, ledit ensemble optique comportant, en combinaiso un groupe optique avant plan convexe à face plane vers l'avant, propre à permettre le fonctionnement de l'obje dans des milieux ambiants d'indices différents, et un groupe optique arrière, propre à assurer les corrections nécessaires pour maintenir les aberrations dans des limites raisonnables et à ajuster à une valeur déterminée le tirage mécanique, et étant d'une manière générale caractérisé en ce que le groupe optique avant (G) est consti par une lentille plan convexe (L) unique, en ce que ladite lentille plan convexe (L) est d'indice égal à 1,45, son nombre d'Abbe est égal à 68, et, pour une focale totale supposée ramenée à 1 mm, elle est située à une distan de la pupille d'entrée (D₁) comprise entre 0,02 et 0,04 mm, son épaisseur au centre est comprise entre 0,08 et 0, mm, et le rayon de sa face arrière est compris entre 0,92 et 0,93 mm, en ce que le groupe optique arrière (G') e à une distance du groupe optique avant (G) qui, pour une focale totale supposée ramenée à 1 mm, est compris entre 0,14 et 0,18 mm, en ce que ledit groupe optique arrière (G') comporte une première lentille (L'₁) bi-concav qui, pour une focale totale supposée ramenée à 1 mm, a une épaisseur au centre comprise entre 0,06 et 0,08 m avec un rayon compris entre 0,39 et 0,40 mm pour la face d'entrée et 1,03 et 1,04 mm pour la face de sortie, et dont l'indice est égal à 1,80 et le nombre d'Abbe à 25, en ce que ledit groupe optique arrière (G') comporte une deuxième lentille (L'₂), qui est biconvexe et qui est accolée à la lentille bi-concave (L'₁) précédente, ladite deuxième lentille (L'₂) ayant un indice égal à 1,49, un nombre d'Abbe égal à 70 et, pour une focale totale supposée ramenée à 1 mm, une épaisseur au centre comprise entre 0,49 et 0,51 mm, et un rayon compris entre 1,03 et 1,04 mm pour la face d'entrée et 0,71 et 0,72 mm pour la face de sortie, en ce que ledit groupe optique arrière (G') comporte une troisième lentille (L'₃), qui est concavo-convexe, avec sa face concave tournée vers la lentille (L'₂) précédente, et qui, pour une focale totale supposée ramenée à 1 mm, est située à une distance de ladite lentille (L'₂) précédente comprise entre 0,01 et 0,02 mm, ladite troisième lentille (L'₃) ayant un indice égal 1,62, un nombre d'Abbe égal à 53, et, pour ladite focale totale supposée ramenée à 1 mm, une épaisseur au centre comprise entre 0,39 et 0,41 mm, et un rayon compris entre 1,62 et 1,63 mm pour la face d'entrée et 1,28 1,29 mm pour la face de sortie, en ce que ledit groupe optique arrière (G') comporte une quatrième lentille (L'₄), qui est bi-convexe, et qui, pour une focale totale supposée ramenée à 1 mm, est située à une distance de la lentille (L'₃) précédente comprise entre 0,01 et 0,02 mm, ladite quatrième lentille (L'₄) ayant un indice égal à 1,6 un nombre d'Abbe égal à 53, et, pour ladite focale totale supposée ramenée à 1 mm, une épaisseur au centre comprise entre 0,60 et 0,62 mm, et un rayon compris entre 5,08 et 5,14 mm pour la face d'entrée et 1,65 et 1,66 mm pour la face de sortie, en ce que ledit groupe optique arrière (G') comporte une cinquième lentille (L'₅), qui est concavo-convexe, avec sa face convexe tournée vers la lentille (L'₄) précédente, et qui, pour une focale total supposée ramenée à 1 mm, est située à une distance de ladite lentille (L'₄) précédente comprise entre 0, 0,01 m et 0,02 mm, ladite cinquième lentille (L'₅) ayant un indice égal à 1,72, un nombre d'Abbe égal à 30, et, pour ladite focale totale supposée ramenée à 1 mm, une épaisseur au centre comprise entre 0,13 et 0,15 mm, et un rayon compris entre 3,24 et 3,25 mm pour la face d'entrée et 0,89 et 0,90 mm pour la face de sortie, et en ce que ledit groupe optique arrière (G') comporte une sixième lentille (L'₆), qui, bi-convexe, est accolée à la lentille (L'₅) précédente, et a un indice égal à 1,62 et un nombre d'Abbe égal à 53, ladite sixième lentille (L'₆) ayant, pour une focale totale supposée ramenée à 1 mm, une épaisseur au centre comprise entre 0,97 et 0,99 mm, et un rayon compris entre 0,89 et 0,90 mm pour la face d'entrée et 5,08 et 5,14 mm pour la face de sortie.

Plus particulièrement, la présente invention a pour objet un objectif du genre comportant un diaphragme (D₁), ou pupille d'entrée, à l'avant, et un ensemble optique à l'arrière de ladite pupille d'entrée (D₁), ledit ensemble optique comportant, en combinaison, un groupe optique avant (G) plan convexe, à face plane vers l'avant, propre à permettre le fonctionnement de l'objectif dans des milieux ambiants d'indices différents, et un groupe optique arrière (G'), propre à assurer les corrections nécessaires nécessaires pour maintenir les aberrations dans des limites raisonnables, et à ajuster à une valeur déterminée le tirage mécanique, caractérisé en ce que son groupe optique avant (G) comprend une lentille unique (L), plan convexe, qui a sa face plane à l'avant, qui a une épaisseur au centre de 1,15 mm et un rayon de 10,43 mm pour sa face arrière, et dont l'indice est égal à 1,45, et son groupe optique arrière (G') comprend successivement, une première lentille (L'₁), bi-concave, qui est disposée à une distance de 1,86 mm de la lentille précédente, qui a une épaisseur au centre de 0,77 mm et un rayon de 4,45 mm pour sa face d'entrée et de 11,72 mm pour sa face de sortie, et dont l'indice est égal à 1,80, une deuxième lentille (L'₂), bi-convexe, accolée à la précédente lentille (L'₁), qui a une épaisseur au centre de 5,65 mm et un rayon de 11,72 mm pour sa face d'entrée et de 8,01 mm pour sa face de sortie, et dont l'indice est égal à 1,49, une troisième lentille (L'₃), concavo-convexe, qui est disposée à une distance de 0,19 mm de la lentille (L'₂) précédente, face concave vers l'avant, qui a une épaisseur au centre de 4,62 mm et un rayon de 18,371 mm pour la face d'entrée et de 14,531 mm pour la face de sortie, et dont l'indice est égal à 1,62 une quatrième lentille (L'₄), bi-convexe, qui est disposée à une distance de 0,19 mm de la précédente lentille (L'₃), qui a une épaisseur au centre de 6,92 mm et un rayon de 57,652 mm pour sa face d'entrée et de 18,700 mm pour sa face de sortie, et dont l'indice est égal à 1,62, une cinquième lentille (L'₅), concavo-convexe, qui est disposée à une distance de 0,19 mm de la lentille (L'₄) précédente, face convexe vers l'avant, qui a une épaisseur au centre de 1,54 mm et un rayon de 36,623 mm pour sa face d'entrée et de 10,110 mm our sa face de sortie, et dont l'indice est égal à 1,72, et une sixième lentille (L'₆), bi-convexe, accolée à la précédente lentille (L'₅), qui a une épaisseur au centre de 11 mm et un rayon de 10,14 mm pour la face d'entrée et de 57,652 mm pour la face de sortie, et dont l'indice est égal à 1,62, pour une focale totale de 11,27 mm et un tirage, c'est-à-dire une distance entre la face arrière du groupe optique arrière (G') et le plan focal image (F), de 14,56 mm.

Par groupe optique on entend ici, de manière usuelle, un élément optique, qui, constitué soit d'une lentille unique, soit d'un doublet, soit d'un nombre multiple de lentilles, répond à une fonction déterminée.

Outre que, par son dioptre d'entrée plan, le groupe optique avant de l'objectif suivant l'invention permet avantageusement de mettre indifféremment en oeuvre celui-ci aussi bien en milieu aérien qu'en milieu aquatique, et d'éviter tout effet intempestif d'"oeil de chat" en éclairage latéral, ce qui serait immanquablement le cas si ce dioptre d'entrée était courbe en raison de la focalisation alors assurée par celui-ci, il permet avantageusement, par son dioptre de sortie convexe, de resserrer le faisceau entrant, et, par là, de faciliter la minimisation des inévitables aberrations dans le groupe optique arrière suivant.

Il assume donc en pratique une double fonction.

Corollairement, le groupe optique arrière de l'objectif suivant l'invention permet avantageusement, après une divergence du faisceau entrant, qui est nécessaire à l'expansion de celui-ci, mais dont les conséquences sont minimisées, comme mentionné ci-dessus, en raison de la convergence précédemment assurée par le groupe optique avant, une convergence suffisamment progressive de ce faisceau pour que la valeur déterminée recherchée pour le tirage mécanique puisse être obtenue.

Ainsi, l'objectif suivant l'invention correspond à un compromis particulièrement avantageux entre les diverses exigences à respecter.

En outre, appliqué à un appareil de prise de vue, il permet à celui-ci d'être particulièrement aisé à dissimuler, son encombrement hors-tout pouvant être inférieur par exemple à 50 mm pour une pupille d'entrée inférieure par exemple à 3 mm et une focale totale de l'ordre de 11,3.

Enfin, si désiré, il peut aussi bien être appliqué à un appareil de projection, par exemple pour une projection entre deux murs.

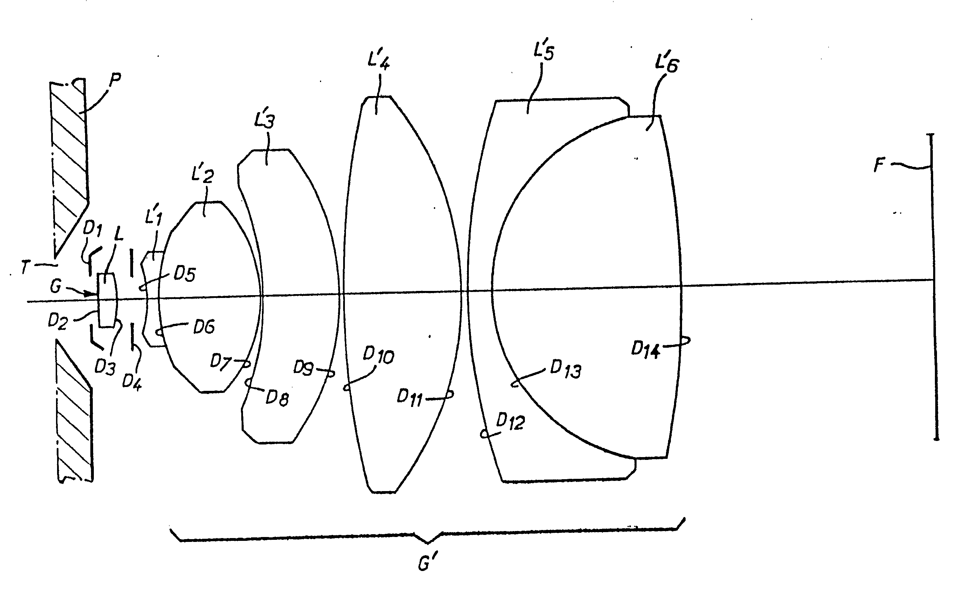

Les caractéristiques et avantages de l'invention ressortiront d'ailleurs de la description qui va suivre, à titre d'exemple, en référence à la figure unique du dessin annexé, qui est une vue en élévation coupe d'un objectif suivant l'invention, et qui illustre l'application de celui-ci à un quelconque appareil de prise de vue.

Dans la forme de mise en oeuvre illustrée par cette figure, l'objectif suivant l'invention est appliqué à l'exercice d'une surveillance, et il est de ce fait placé derrière un quelconque panneau ou mur P percé à cet effet d'un trou T.

De préférence, et tel que représenté, ce trou T est globalement tronconique, sa section allant en croissant de l'avant vers l'arrière, avec une conicité suffisante pour permettre l'inclinaison de l'objectif suivant l'invention, et ainsi, la visée de différents points du champ, sans que le faisceau de lumière entrant soit obstrué.

Suivant une variante non représentée, et convenant notamment au cas d'une application autre qu'une surveillance discrète, le diaphragme D₁ peut par exemple être formé par la face arrière du panneau ou mur P, dont la section du trou tronconique T va alors en décroissant de l'avant vers l'arrière.

Quoi qu'il en soit, et tel qu'illustré par la figure, l'objectif suivant l'invention est formé par une succession de constituants, dioptres ou diaphragmes.

Il y a tout d'abord, à l'avant, un diaphragme $D_1$, qui en forme la pupille d'entrée.

Tel que schématisé en trait plein sur la figure, ce diaphragme $D_1$ fait partie intégrante du dispositif de suppor de l'objectif, ou barillet, qui ne sera pas détaillé ici.

En pratique, pour une focale totale supposée ramenée à 1 mm, le diamètre utile du diaphragme $D_1$, peut être l'ordre de 0,26 mm.

A l'arrière du diaphragme $D_1$, l'objectif suivant l'invention comporte un ensemble optique, dont les constituar optiques sont regroupés, suivant l'invention, et en combinaison, en deux sous-ensembles, l'un formant un grou optique avant G, l'autre formant un groupe optique arrière G'.

Suivant l'invention, le groupe optique avant G est planconvexe, avec sa face plane tournée vers l'avant, c'est-à-dire vers le diaphragme $D_1$.

En pratique, dans la forme de réalisation représentée, le groupe optique avant G est constitué par une lentille plan-convexe unique L, et, de manière usuelle, celle-ci est définie par deux dioptres, à savoir un dioptre $D_2$, qui forme la face avant, et qui est plan, et un dioptre $D_3$, qui en forme la face arrière, et qui est convexe.

Cette lentille L a un indice égal à 1,45, son nombre d'Abbe est égal à 68 et elle est par exemple réalisée dans matière vendue sous la désignation commerciale "HERASIL", une telle matière présentant avantageusement de propriétés chimiques et physiques de nature à lui permettre de résister à des milieux corrosifs ou abrasifs, et autorisant ainsi une surveillance dans de tels milieux.

Pour une focale totale supposée ramenée à 1 mm, elle est située à une distance du diaphragme $D_1$ constituar la pupille d'entrée, mesurée par rapport à son dioptre d'entrée $D_2$, comprise entre 0,02 et 0,04 mm, son épaisse au centre est comprise entre 0,08 et 0,11 mm, et le rayon du dioptre $D_3$ qui en forme la face arrière est compris entre 0,92 et 0,93 mm.

De préférence, et tel que représenté, le groupe optique arrière G' est à une distance du groupe optique avant qui, mesurée entre le dioptre de sortie $D_3$ du groupe optique avant G et le dioptre d'entrée $D_5$ du groupe optiqu arrière G', est, pour une focale totale supposée ramenée à 1 mm, comprise entre 0,14 et 0,18 mm.

De préférence également, et tel que représenté, un diaphragme $D_4$ est disposé sensiblement à mi-distance er le groupe optique avant G et le groupe optique arrière G'.

Par exemple, la distance entre le dioptre de sortie $D_3$ du groupe optique avant G et ce diaphragme $D_4$ peut, d les conditions indiquées, être comprise entre 0,07 et 0,09 mm, et, de même, sa distance au dioptre d'entrée $D_5$ groupe optique arrière G' peut être comprise entre 0,07 et 0,09 mm.

Quoi qu'il en soit, le diamètre utile de ce diaphragme $D_4$ est de préférence, pour une focale totale supposée ramenée à 1 mm, de l'ordre de 0,25 mm.

Dans la forme de réalisation représentée, le groupe optique arrière G' comporte une succession de six lentille $L'_1$, $L'_2$, $L'_3$, $L'_4$, $L'_5$ et $L'_6$.

La lentille $L'_1$ est bi-concave, entre le dioptre $D_5$, qui constitue le dioptre d'entrée du groupe optique arrière G et qui en forme la face avant, et un dioptre $D_6$, qui en forme la face arrière.

Pour une focale totale supposée ramenée à 1 mm, elle a une épaisseur au centre comprise entre 0,06 et 0,08 mm, avec un rayon compris entre 0,39 et 0,40 mm pour la face d'entrée, et 1,03 et 1,04 mm pour la face de sor Son indice est voisin de 1,8, son nombre d'Abbe est égal à 25, et elle peut par exemple être réalisée dans la matière connue en optique sous la référence E 05–25.

La lentille $L'_2$ est bi-convexe, et elle est accolée à la lentille concave $L'_1$ précédente.

Autrement dit, ces deux lentilles ont en commun le dioptre $D_6$, qui forme la face de sortie pour l'une et la fac d'entrée pour l'autre.

Outre ce dioptre $D_6$, la lentille $L'_2$ se trouve définie par un dioptre $D_7$, qui en forme la face de sortie.

Pour une focale totale supposée ramenée à 1 mm, la lentille $L'_2$ a une épaisseur au centre comprise entre 0,4 et 0,51 mm et un rayon compris entre 1,03 et 1,04 mm pour sa face d'entrée et 0,71 et 0,72 mm pour sa face de sortie.

Elle a un indice égal à 1,49 et un nombre d'Abbe égal à 70, et elle peut par exemple être réalisée dans la matière connue en optique sous la référence A 87–70.

La lentille $L'_3$ est concavo-convexe, et a sa face concave tournée vers la lentille $L'_3$ précédente.

Elle est définie par deux dioptres $D_8$, $D_9$, le premier en formant la face d'entrée, et le deuxième la face de sor

Elle est située à une distance de la lentille $L'_2$ précédente, mesurée entre les dioptres $D_7$, $D_8$ correspondants, pour une focale totale supposée ramenée à 1 mm, est comprise entre 0,01 mm et 0,02 mm.

Pour ladite focale totale supposée ramenée à 1 mm, elle a une épaisseur au centre comprise entre 0,39 et 0,4 mm, et un rayon compris entre 1,62 et 1,63 mm pour sa face d'entrée et 1,28 et 1,29 mm pour sa face de sortie

Enfin, elle a un indice égal à 1,62 et un nombre d'Abbe égal à 53, et elle peut par exemple être réalisée dans matière connue en optique sous la référence C 23–53.

La quatrième lentille $L'_4$ est bi-convexe.

Définie entre deux dioptres $D_{10}$, $D_{11}$, dont le premier en forme la face d'entrée et le second la face de sortie, e est située à une distance de la lentille $L'_3$ précédente, mesurée entre les dioptres $D_9$, $D_{10}$ correspondants, qui, p une focale totale supposée ramenée à 1 mm, est comprise entre 0,01 et 0,02 mm.

Pour ladite focale totale supposée ramenée à 1 mm, elle a une épaisseur au centre comprise entre 0,60 et 0,6 mm et un rayon compris entre 5,08 et 5,14 mm pour sa face d'entrée et 1,65 et 1,66 mm pour sa face de sortie.

Enfin, elle a un indice égal à 1,62 et un nombre d'Abbe égal à 53, et elle peut par exemple être réalisée dans la matière connue en optique sous la référence C 23–53.

La cinquième lentille $L'_5$ est concavo-convexe, et a sa face convexe tournée vers la lentille $L'_4$ précédente.

Elle est définie entre deux dioptres $D_{12}$, $D_{13}$, dont le premier en forme la face d'entrée et le second la face de sortie.

Pour une focale totale supposée ramenée à 1 mm, elle est située à une distance de la lentille $L'_4$ précédente, mesurée entre les dioptres $D_{11}$, $D_{12}$ correspondants, comprise entre 0,01 et 0,02 mm.

Pour ladite focale totale supposée ramenée à 1 mm, elle a une épaisseur au centre comprise entre 0,13 et 0,15 mm et un rayon compris entre 3,24 et 3,25 mm pour sa face d'entrée et 0,89 et 0,90 mm pour sa face de sortie.

Enfin, elle a un indice égal à 1,72 et un nombre d'Abbe égal à 30, et elle peut par exemple être réalisée dans la matière connue en optique sous la référence D 17–29.

La lentille $L'_6$ est bi-convexe, et elle est accolée à la lentille $L'_5$ précédente.

Le dioptre $D_{13}$ en forme donc la face d'entrée, tandis qu'un dioptre $D_{14}$, qui est le dioptre de sortie du groupe optique arrière G', en forme la face de sortie.

Pour une focale totale supposée ramenée à 1 mm, son épaisseur au centre est comprise entre 0,97 et 0,99 mm, et elle a un rayon compris entre 0,89 et 0,90 mm pour sa face d'entrée et 5,08 et 5,14 mm pour sa face de sortie.

Enfin, elle a un indice égal à 1,62 et un nombre d'Abbe égal à 53, et elle peut par exemple être réalisée dans la matière connue en optique sous la référence C 23–53.

Certaines des valeurs numériques indiquées ci-dessus sont rassemblées dans le Tableau I suivant, qui, en fonction des références des constituants, dioptres ou diaphragmes, en cause, donne la nature d'un tel constituant, et, en mm, pour une focale totale ramenée à 1 mm, le minimum et le maximum de sa distance au constituant suivant, le minimum et le maximum de son rayon, s'il s'agit d'un dioptre, et son diamètre utile.

Pour préciser l'orientation des dioptres, leurs rayons y ont été affectés d'un signe, positif si le rayon d'un tel dioptre se situe de l'autre côté de celui-ci par rapport à la pupille d'entrée, et négatif dans le cas contraire.

## TABLEAU I

### Pour focale totale ramenée à 1 mm

| constituant (dioptre ou diaphragme) | Nature du constituant | distance au constituant suivant (mm) | | rayon (dioptre) (mm) | | diamètre utile (mm) |
|---|---|---|---|---|---|---|
| | | mini | maxi | mini | maxi | |
| $D_1$ | diaphragme | 0,02 | 0,04 | | | 0,259 |
| $D_2$ | dioptre | 0,08 | 0,11 | $\infty$ | | 0,28 |
| $D_3$ | " | 0,07 | 0,09 | −0,93 | −0,92 | 0,28 |
| $D_4$ | diaphragme | 0,07 | 0,09 | | | 0,25 |
| $D_5$ | dioptre | 0,06 | 0,08 | −0,40 | −0,39 | 0,32 |
| $D_6$ | " | 0,49 | 0,51 | +1,03 | +1,04 | 0,47 |
| $D_7$ | " | 0,01 | 0,02 | −0,72 | −0,71 | 0,99 |
| $D_8$ | " | 0,39 | 0,41 | −1,63 | −1,62 | 1,17 |
| $D_9$ | " | 0,01 | 0,02 | −1,29 | −1,28 | 1,53 |
| $D_{10}$ | " | 0,60 | 0,62 | +5,08 | +5,14 | 1,99 |
| $D_{11}$ | " | 0,01 | 0,02 | −1,66 | −1,65 | 2,07 |
| $D_{12}$ | " | 0,13 | 0,15 | +3,24 | +3,25 | 1,99 |
| $D_{13}$ | " | 0,97 | 0,99 | +0,89 | +0,90 | 1,75 |
| $D_{14}$ | " | | | −5,14 | −5,08 | 1,76 |

Le Tableau I bis suivant reprend de manière semblable, dans les mêmes conditions, ces valeurs numériques, mais en les rapportant aux lentilles en cause, la distance d'une telle lentille étant alors donnée par rapport à la lentille précédente.

Ce Tableau I bis précise en outre la nature et l'indice de ces lentilles.

## TABLEAU I bis

### Pour focale totale ramenée à 1 mm

| lentille | distance à lentille précédente (mm) mini    maxi | nature | indice | épaisseur du centre (mm) mini    maxi | | rayon (mm) | |
|---|---|---|---|---|---|---|---|
| | | | | | | face d'entrée mini    maxi | face de sortie mini    maxi |
| L | | plan convexe | 1,45 | 0,08 | 0,11 | ∞ | −0,93 −0,92 |
| L'$_1$ | 0,14   0,18 | biconcave | 1,80 | 0,06 | 0,08 | −0,40 −0,39 | +1,03 +1,04 |
| L'$_2$ | 0 | biconvexe | 1,49 | 0,49 | 0,51 | +1,03 +1,04 | −0,72 −0,71 |
| L'$_3$ | 0,01   0,02 | concavo-convexe | 1,62 | 0,39 | 0,41 | −1,63 −1,62 | −1,29 −1,28 |
| L'$_4$ | 0,01   0,02 | biconvexe | 1,62 | 0,60 | 0,62 | +5,08 +5,14 | −1,66 −1,65 |
| L'$_5$ | 0,01   0,02 | concavo-convexe | 1,72 | 0,13 | 0,15 | +3,24 +3,25 | +0,89 +0,90 |
| L'$_6$ | 0 | biconcave | 1,62 | 0,97 | 0,99 | +0,89 +0,90 | −5,14 −5,08 |

Avec les valeurs indiquées ci-dessus, le tirage mécanique de l'objectif suivant l'invention, c'est-à-dire la dista séparant son dioptre de sortie $D_{14}$ du plan focal image F, tel que représenté à la figure, est, pour une focale tot supposée ramenée à 1 mm, compris entre 1,2 et 1,4 mm, et son encombrement total est alors compris entre 4, et 4,55 mm.

Compte tenu de la valeur indiquée ci-dessus pour le diamètre utile de la pupille d'entrée, le nombre d'ouvert de l'objectif suivant l'invention est de 3,86.

Il ressort des valeurs et caractéristiques indiquées que le groupe optique avant G de l'objectif suivant l'inven est, d'une manière générale, propre à permettre le fonctionnement de celui-ci dans des milieux d'indices différents, et, notamment, aussi bien dans l'air que dans l'eau, et que son groupe optique arrière G' est, conjointement, propre d'une manière générale à donner les corections nécessaires pour maintenir les aberratic dans des limites raisonnables et à ajuster à une valeur déterminée, désirée, le tirage mécanique.

Les Tableaux II et II bis suivants donnent ci-après, à titre d'exemples non limitatifs, et de manière semblable respectivement aux Tableaux I et I bis précédents, les valeurs numériques d'un objectif de focale totale égale à 11,27 mm donnant tout particulièrement satisfaction.

### TABLEAU II
Pour focale totale de 11,27 mm

| constituant (dioptre ou diaphragme) | nature du constituant | distance au constituant suivant (mm) | rayon (dioptre) (mm) | diamètre utile (mm) |
|---|---|---|---|---|
| $D_1$ | diaphragme | 0,4 | | 2,92 |
| $D_2$ | dioptre | 1,15 | $\infty$ | 3,10 |
| $D_3$ | " | 0,87 | -10,43 | 3,10 |
| $D_4$ | diaphragme | 0,99 | | 2,80 |
| $D_5$ | dioptre | 0,77 | -4,45 | 3,63 |
| $D_6$ | " | 5,65 | 11,72 | 5,30 |
| $D_7$ | " | 0,19 | -8,01 | 11,1 |
| $D_8$ | " | 4,62 | -18,371 | 13,2 |
| $D_9$ | " | 0,19 | -14,531 | 17,2 |
| $D_{10}$ | " | 6,92 | 57,652 | 22,4 |
| $D_{11}$ | " | 0,19 | -18,700 | 23,3 |
| $D_{12}$ | " | 1,54 | 36,623 | 22,4 |
| $D_{13}$ | " | 11,00 | 10,110 | 19,7 |
| $D_{14}$ | " | | -17,652 | 19,8 |

### TABLEAU II bis
Pour focale totale de 11,27 mm

| lentille | distance à lentille précédente (mm) | nature | indice | épaisseur au centre (mm) | rayon (mm) face d'entrée | rayon (mm) face de sortie |
|---|---|---|---|---|---|---|
| L | | plan convexe | 1,45 | 1,15 | $\infty$ | -10,43 |
| $L'_1$ | 1,86 | bi-concave | 1,80 | 0,77 | -4,45 | 11,72 |
| $L'_2$ | 0 | bi-convexe | 1,49 | 5,65 | 11,72 | -8,01 |
| $L'_3$ | 0,19 | concavo-convexe | 1,62 | 4,62 | -18,371 | -14,531 |
| $L'_4$ | 0,19 | bi-convexe | 1,62 | 6,92 | 57,652 | -18,700 |
| $L'_5$ | 0,19 | concavo-convexe | 1,72 | 1,54 | 36,623 | 10,110 |
| $L'_6$ | 0 | bi-convexe | 1,62 | 11 | 10,110 | -57,652 |

Le tirage mécanique de cet objectif, tel que défini ci-dessus, est alors de 14,56 mm, et son encombrement tot de 49 mm.

Dans tous les cas, il est à noter que, lors d'une application à une surveillance industrielle, le diaphragme avai forme avantageusement une protection mécanique pour l'objectif et le matériel de prise de vue qu'il équipe, notamment lorsqu'il y a des risques de projections de copeaux ou autres éclats.

## Revendications

1. Objectif d'appareil de prise de vue, du genre comportant un diaphragme ($D_1$), ou pupille d'entrée, à l'avant, ( un ensemble optique à l'arrière le ladite pupille d'entrée ($D_1$), ledit ensemble optique comportant, en combinais un groupe optique avant (G) plan convexe, à face plane vers l'avant, propre à permettre le fonctionnement de l'objectif dans des milieux ambiants d'indices différents, et un groupe optique arrière (G'), propre à assurer les corrections nécessaires pour maintenir les aberrations dans des limites raisonnables, et à ajuster à une valeur déterminée le tirage mécanique, caractérisé en ce que le groupe optique avant (G) est constitué par une lentille plan convexe (L) unique, en ce que ladite lentille plan convexe (L) est d'indice égal à 1,45, son nombre d'Abbe ( égal à 68, et, pour une focale totale supposée ramenée à 1 mm, elle est située à une distance de la pupille d'entrée ($D_1$) comprise entre 0,02 et 0,04 mm, son épaisseur au centre est comprise entre 0,08 et 0,11 mm, et le rayon de sa face arrière est compris entre 0,92 et 0,93 mm, en ce que le groupe optique arrière (G') est à une distance du groupe optique avant (G) qui, pour une focale totale supposée ramenée à 1 mm, est comprise entre 0,14 et 0,18 mm, en ce que ledit groupe optique arrière (G') comporte une première lentille ($L'_1$) bi-concave, qui pour une focale totale supposée ramenée à 1 mm, a une épaisseur au centre comprise entre 0,06 et 0,08 mm, avec un rayon compris entre 0,39 et 0,40 mm pour la face d'entrée et 1,03 et 1,04 mm pour la face de sortie, et dont l'indice est égal à 1,80 et le nombre d'Abbe à 25, en ce que ledit groupe optique arrière (G') comporte une deuxième lentille ($L'_2$), qui est bi-convexe et qui est accolée à la lentille bi-concave ($L'_1$) précédente, ladite deuxième lentille ($L'_2$) ayant un indice égal à 1,49, un nombre d'Abbe égal à 70 et, pour une focale totale supposée ramenée à 1 mm, une épaisseur au centre comprise entre 0,49 et 0,51 mm, et un rayon compris entre 1,03 et 1,04 mm pour la face d'entrée et 0,71 et 0,72 mm pour la face de sortie, en ce que ledit groupe optique arrière (G') comporte une troisième lentille ($L'_3$), qui est concavo-convexe, avec sa face concave tournée vers la lentille ($L'_2$) précédente, et qui, pour une focale totale supposée ramenée à 1 mm, est située à une distance de ladite lentille ($L'_2$) précédente comprise entre 0,01 et 0,02 mm, ladite troisième lentille ($L'_3$) ayant un indice égal 1,62, un nombre d'Abbe égal à 53, et, pour ladite focale totale supposée ramenée à 1 mm, une épaisseur au centre comprise entre 0,39 et 0,41 mm, et un rayon compris entre 1,62 et 1,63 mm pour la face d'entrée et 1,28 1,29 mm pour la face de sortie, en ce que ledit groupe optique arrière (G') comporte un quatrième lentille ($L'_4$), est bi-convexe, et qui, pour une focale totale suppsoée ramenée à 1 mm, est située à une distance de la lentille ($L'_3$) précédente comprise entre 0,01 et 0,02 mm, ladite quatrième lentille ($L'_4$) ayant un indice égal à 1,62, un nombre d'Abbe égal à 53, et, pour ladite focale totale supposée ramenée à 1 mm, une épaisseur au centre comprise entre 0,60 et 0,62 mm, et un rayon compris entre 5,08 et 5,14 mm pour la face d'entrée et 1,65 et 1,66 mm pour la face de sortie, en ce que ledit groupe optique arrière (G') comporte une cinquième lentille ($L'_5$), qui est concavo-convexe, avec sa face convexe tournée vers la lentille ($L'_4$) précédente, et qui pour une focale totale supposée ramenée à 1 mm, est située à une distance de ladite lentille ($L'_4$) précédente comprise entre 0, 0,01 m et 0,02 mm, ladite cinquième lentille ($L'_5$) ayant un indice égal à 1,72, un nombre d'Abbe égal à 30, et, pour ladite focale totale supposée ramenée à 1 mm, une épaisseur au centre comprise entre 0,13 et 0,15 mm, et un rayon compris entre 3,24 et 3,25 mm pour la face d'entrée et 0,89 et 0,90 mm pour la face de sortie, et en ce que ledit groupe optique arrière (G') comporte une sixième lentille ($L'_6$), qui, bi-convexe, est accolée à la lentille ($L'_5$) précédente, et a un indice égal à 1,62 et un nombre d'Abbe égal à 53, ladite sixième lentille ($L'_6$) ayant, pour un focale totale supposée ramenée à 1 mm, une épaisseur au centre comprise entre 0,97 et 0,99 mm, et un rayon compris entre 0,89 et 0,90 mm pour la face d'entrée et 5,08 et 5,14 mm pour la face de sortie.

2. Objectif suivant la revendication 1, caractérisé en ce que, à sensiblement mi-distance entre le groupe optic avant (G) et le groupe optique arrière (G'), est disposé un diaphragme ($D_4$).

3. Objectif suivant la revendication 2, caractérisé en ce que, pour une focale totale supposée ramenée à 1 mr le diamètre utile dudit diaphragme ($D_4$) est de l'ordre de 0,25 mm.

4. Objectif suivant l'une quelconque des revendications 1 à 3, caractérisé en ce que, pour une focale totale supposée ramenée à 1 mm, son tirage, c'est-à-dire la distance séparant du plan focal image (F) la face arrière d groupe optique arrière (G') est comprise entre 1,2 et 1,4 mm.

5. Objectif suivant l'une quelconque des revendications 1 à 4, caractérisé en ce que, pour une focale totale supposée ramenée à 1 mm, le diamètre utile de la pupille d'entrée ($D_1$) est de l'ordre de 0,26 mm.

6. Objectif d'appareil de prise de vue, du genre comportant un diaphragme ($D_1$), ou pupille d'entrée, à l'avan et un ensemble optique à l'arrière de ladite pupille d'entrée ($D_1$), ledit ensemble optique comportant, en combinaison un groupe optique avant (G) plan convexe, à face plane vers l'avant, propre à permettre le fonctionnement de l'objectif dans des milieux ambiants d'indices différents, et un groupe optique arrière (G'), propre à assurer les corrections nécessaires pour maintenir les aberrations dans des limites raisonnables, et à ajuster à une valeur déterminée le tirage mécanique, caractérisé en ce que son groupe optique avant (G) comprend une lentille unique (L), plan convexe, qui a sa face plane à l'avant, qui a une épaisseur au centre de 1,15 mm et un rayon de 10,43 mm pour sa face arrière, et dont l'indice est égal à 1,45, et son groupe optique arrière (G') comprend successivement, une première lentille (L'₁), bi-concave, qui est disposée à une distance de 1,86 mm de la lentille précédente, qui a une épaisseur au centre de 0,77 mm et un rayon de 4,45 mm pour sa face d'entrée et de 11,72 mm pour sa face de sortie, et dont l'indice est égal à 1,80, une deuxième lentille (L'₂), bi-convexe, accolée à la précédente lentille (L'₁), qui a une épaisseur au centre de 5,65 mm et un rayon de 11,72 mm pour sa face d'entrée et de 8,01 mm pour sa face de sortie, et dont l'indice est égal à 1,49, une troisième lentille (L'₃), concavo-convexe, qui est disposée à une distance de 0,19 mm de la lentille (L'₂) précédente, face concave vers l'avant, qui a une épaisseur au centre de 4,62 mm et un rayon de 18,371 mm pour la face d'entrée et de 14,531 mm pour la face de sortie, et dont l'indice est égal à 1,62, une quatrième lentille (L'₄), bi-convexe, qui est disposée à une distance de 0,19 mm de la précédente lentille (L'₃), qui a une épaisseur au centre de 6,92 mm et un rayon de 57,652 mm pour sa face d'entrée et de 18,700 mm pour sa face de sortie, et dont l'indice est égal à 1,62, une cinquième lentille (L'₅), concavo-convexe, qui est disposée à une distance de 0,19 mm de la lentille (L'₄) précédente, face convexe vers l'avant, qui a une épaisseur au centre de 1,54 mm et un rayon de 36,623 mm pour sa face d'entrée et de 10,110 mm pour sa face de sortie, et dont l'indice est égal à 1,72, et une sixième lentille (L'₆), bi-convexe, accolée à la précédente lentille (L'₅), qui a une épaisseur au centre de 11 mm et un rayon de 10,14 mm pour la face d'entrée et de 57,652 mm pour la face de sortie, et dont l'indice est égal à 1,62, pour une focale totale de 11,27 mm et un tirage, c'est-à-dire une distance entre la face arrière du groupe optique arrière (G') et le plan focal image (F), de 14,56 mm.

7. Objectif suivant la revendication 6, caractérisé en ce que le diamètre utile de la pupille d'entrée (D₁) est de 2,92 mm.

## Patentansprüche

1. Objektiv für eine Aufnahmevorrichtung, vorn mit einer Blende oder Eintrittspupille (D₁) und einer optischen Anordnung hinter der Eintrittspupille (D₁), wobei die optische Anordnung in Kombination eine vordere optische plankonvexe Gruppe (G) mit einer ebenen Fläche zur Vorderseite hin für den Betrieb des Objektivs unter Umgebungsbedingungen mit verschiedenen Merkmalen, und eine hintere optische Gruppe (G') aufweist, mit welcher die erforderlichen Korrekturen gewährleistet sind, um die Abbildungsfehler in annehmbaren Grenzen zu halten und um den mechanischen Zug auf einen vorbestimmten Wert einzuregeln, dadurch gekennzeichnet, daß die vordere optische Gruppe (G) von einer einzigen plankonvexen Linse (L) gebildet wird, daß die plankonvexe Linse (L) eine Brechungszahl von 1,45 und eine Abbe-Zahl von 68 aufweist, daß sie für eine auf 1 mm zurückgeführte angenommene Gesamtbrennweite in einem Abstand zu der Eintrittspupille (D₁) von 0,02 bis 0,04 mm angeordnet ist, wobei ihre Mittendicke zwischen 0,08 und 0,11 mm und der Radius der Rückseite zwischen 0,92 und 0,93 mm beträgt, daß die hintere optische Gruppe (G') in einem Abstand zur vorderen optischen Gruppe (G) angeordnet ist, welcher für eine auf 1 mm zurückgeführte angenommene Gesamtbrennweite zwischen 0,14 und 0,18 mm liegt, daß die hintere optische Gruppe (G') eine bikonkave erste Linse (L'₁) aufweist, welche für eine auf 1 mm zurückgeführte angenommene Gesamtbrennweite eine Mittendicke zwischen 0,06 und 0,08 mm mit einem Radius zwischen 0,39 und 0,40 mm für die Eintrittsseite und zwischen 1,03 und 1,04 mm für die Austrittsseite aufweist und deren Brechungszahl gleich 1,80 und deren Abbe-Zahl gleich 25 ist, daß die hintere optische Gruppe (G') eiene zweite Linse (L'₂) aufweist, welche bikonvex und direkt an der vorhergehenden bikonkaven Linse (L'₁) angefügt ist, wobei die zweite Linse (L'₂) eine Brechungszahl von 1,49 und eine Abbe-Zahl von 70 aufweist und für eine auf 1 mm zurückgeführte angenommene Gesamtbrennweite eine Mittendicke zwischen 0,49 und 0,51 mm und einen Radius zwischen 1,03 und 1,04 an der Eintrittsseite und zwischen 0,71 und 0,72 mm an der Austrittsseite aufweist, daß die hintere optische Gruppe (G') eine dritte Linse (L'₃) aufweist, welche konkav-konvex ist und mit ihrer konkaven Fläche zu der vorangehenden Linse (L'₂) gerichtet ist und welche für eine auf 1 mm zurückgeführte angenommene Gesamtbrennweite in einem Abstand zu der vorangehenden Linse (L'₂) zwischen 0,01 und 0,02 mm angeordnet ist, daß die dritte Linse (L'₃) eine Brechungszahl gleich 1,62, eine Abbe-Zahl gleich 53 und für die auf 1 mm zurückgeführte angenommene Gesamtbrennweite eine Mittendicke zwischen 0,39 und 0,41 und einen Radius zwischen 1,62 und 1,63 für die Eintrittsseite und zwischen 1,28 und 1,29 für die Austrittsseite aufweist, daß die hintere optische Gruppe (G') eine vierte Linse (L'₄) aufweist, welche bikonvex ist und welche für eine auf 1 mm zurückgeführte angenommene Gesamtbrennweite in einem Abstand zu der vorangehenen Linse (L'₃) zwischen 0,01 und 0,02 mm angeordnet ist, daß die vierte Linse (L'₄) eine Brechungszahl von 1,62, eine Abbe-Zahl von 53 und für die auf 1 mm zurückgeführte angenommene Gesamtbrennweite eine Mittendicke zwischen 0,60 bis 0,62 mm und einen Radius zwischen 5,08 und 5,14 für die Eintrittsfläche und zwischen 1,65 und 1,66 für die Austrittsfläche aufweist, daß die hintere optische Gruppe (G') eine fünfte Linse (L'₅) aufweist, welche konkav-konvex ist und mit ihrer konvexen Fläche zu der vorhergehenen Linse (L'₄) gerichtet ist, und welche für eine auf 1 mm zurückgeführte angenommene Gesamtbrennweite in einem Abstand zu der vorangehenden Linse (L'₄) zwischen 0,01 mm und 0,02 mm angeordnet ist, daß die fünfte Linse (L'₅) einen Brechungszahl von 1,72 eine Abbe-Zahl von 30 und für die auf 1 mm zurückgeführte angenommene Gesamtbrennweite eine Mittendicke zwischen 0,13 und 0,15 mm und einen Radius zwischen 3,24 und 3,25 für die Eintrittsseite und von 0,89 bis 0,90 für die Austrittsseite aufweist, und daß die hintere optische Gruppe (G') eine

sechste Linse (L'$_6$) aufweist, welche bikonvex ist und direkt an der vorhergehenden Linse (L'$_5$) anliegt und eine Brechungszahl von 1,62 und eine Abbe-Zahl von 53 aufweist, und daß die sechste Linse (L'$_6$) für eine auf 1 mm zurückgeführte angenommene Gesamtbrennweite eine Mittendicke zwischen 0,97 und 0,99 mm und einen Radiu zwischen 0,89 und 0,90 für die Eintrittsseite und zwischen 5,08 und 5,14 mm für die Austrittsseite aufweist.

2. Objektiv nach Anspruch 1, dadurch gekennzeichnet, daß etwa in der Mitte zwischen der vorderen optischen Gruppe (G) und der hinteren optischen Gruppe (G') eine Blende (D$_4$) angeordnet ist.

3. Objektiv nach Anspruch 2, dadurch gekennzeichnet, daß für eine auf 1 mm zurückgeführte angenommene Gesamtbrennweite der brauchbare Durchmesser der Blende (D$_4$) im Bereich von 0,25 mm liegt.

4. Objektiv nach einem der Ansprüche 1 bis 3, dadurch gekennzeichnet, daß für eine auf 1 mm zurückgeführte angenommene Gesamtbrennweite der Zug, d.h. der Abstand, der die Bildbrennebene (F) von der Rückseite der hinteren optischen Gruppe (G') trennt, zwischen 1,2 und 1,4 mm liegt.

5. Objektiv nach einem der Ansprüche 1 bis 4, dadurch gekennzeichnet, daß für eine auf 1 mm zurückgeführte angenommene Gesamtbrennweite der brauchbare Durchmesser der Eintrittspupille (D') in der Größenordnung von 0,26 mm liegt.

6. Objektiv für eine Aufnahmevorrichtung mit einer vorderen Blende oder Eintrittspupille (D$_1$) und mit einer optischen Anordnung hinter der Eintrittspupille (D$_1$), wobei die optische Anordnung in Kombination eine vorder plankonvexe optische Gruppe (G), deren plane Ebene nach vorn gerichtet ist, und die den Betrieb des Objektivs bei Umgebungsbedingungen mit verschiedenen Merkmalen ermöglicht, und eine hintere optische Gruppe (G') aufweist, welche die erforderlichen Korrekturen ermöglicht, um Abbildungsfehler in annehmbaren Grenzen zu halten und den mechanischen Zug auf einen vorbestimmten Wert einzuregeln oder einzustellen, dadurch gekennzeichnet, daß die vordere optische Gruppe (G) eine einzige plankonvexe Linse (L) aufweist, deren plane Fläche nach vorn gerichtet ist und die eine Mittendicke von 1,15 mm und einen Radius von 10,43 mm für die hintere Fläche aufweist und deren Brechungszahl gleich 1,45 ist, und daß die hintere optische Gruppe (G') aufeinanderfolgend aufweist: eine bikonkave erste Linse (L'$_1$), welche in einem Abstand von 1,86 mm zu der vorhergehenden Linse angeordnet ist und welche eine Mittendicke von 0,77 mm und einen Radius von 4,45 mm für die Eintrittsseite und von 11,72 mm für die Austrittsseite aufweist und deren Brechungszahl gleich 1,80 ist, ei bikonvexe zweite Linse (L'$_2$), die direkt an der vorhergehenden Linse (L'$_1$) angeordnet ist und die eine Mittendick von 5,65 mm und einen Radius von 11,72 mm für die Eintrittsseite und von 8,01 mm für die Austrittsseite aufwe und deren Brechungszahl gleich 1,49 ist, eine konkav-konvexe dritte Linse (L'$_3$), die in einem Abstand von 0,19 m zu der vorhergehenden Linse (L'$_2$) angeordnet und deren konkave Fläche nach vorn gerichtet ist, die eine Mittendicke von 4,62 mm und einen Radius von 18,371 mm für die Eintrittsseite und von 14,531 mm für die Austrittsseite aufweist und deren Brechungszahl gleich 1,62 ist, eine bikonvexe vierte Linse (L'$_4$), die in einem Abstand von 0,19 mm zu der vorhergehenden Linse (L'$_3$) angeordnet ist und die eine Mittendicke von 6,92 mm und einen Radius von 57,652 mm für die Eintrittsseite und von 18,700 mm für die Austrittsseite aufweist und deren Brechungszahl gleich 1,62 ist, eine konkav-konvexe fünfte Linse (L'$_5$), die in einem Abstand von 0,19 mm z der vorhergehenden Linse (L'$_4$) angeordnet und deren konvexe Seite nach vorn gerichtet ist, die eine Mittendick von 1,54 mm und einen Radius von 36,623 mm für die Eintrittsseite und von 10,110 mm für die Austrittsseite aufweist und deren Brechungszahl gleich 1,72 ist, und eine bikonvexe siebte Linse (L'$_6$), die direkt an der vorhergehenden Linse (L'$_5$) angeordnet ist und die eine Mittendicke von 11 mm und einen Radius von 10,14 mm für die Eintrittsseite und von 57,652 mm für die Austrittsseite aufweist und deren Brechungszahl gleich 1,62 ist, eine Gesamtbrennweite von 11,27 mm und einen Zug, d.h. einen Abstand zwischen der hinteren Seite der hinteren optischen Gruppe (G') und der Bildbrennebene (F) von 14,56 mm.

7. Objektiv nach Anspruch 6, dadurch gekennzeichnet, daß der brauchbare Durchmesser der Eintrittspupille (C 2,92 mm beträgt.

## Claims

1. Viewing apparatus objective of the type comprising a diaphragm (D$_1$) or entrance pupil at the front and an optical assembly rearwardly of said entrance pupil (D$_1$), said optical assembly comprising in combination a front plano-convex optical group (G), with the flat surface towards the front, capable of permitting the objective to function in ambient media with different indices, and a rear optical group (G') capable of producing the corrections required to maintain the aberrations within reasonable limits and adjusting the mechanical focal length to a given value, characterised in that the front optical group (G) is formed by a single plano-convex lens (L), that said plano-convex lens (L) has an index equal to 1.45, its Abbe number is equal to 68 and, for an assum total focal length reduced to 1 mm, it is disposed at a distance from the entrance pupil (D$_1$) of between 0.02 and 0.04 mm, its thickness at the centre is between 0.08 and 0.11 mm and the radius of its rearward surface is between 0.92 and 0.93 mm, that the rear optical group (G') is at a distance from the front optical group (G) whic for an assumed total focal length reduced to 1 mm, is between 0.14 and 0.18 mm, that said rear optical group (( comprises a first double concave lens (L'$_1$) which, for an assumed total focal length reduced to 1 mm, is of a thickness at the centre of between 0.06 and 0.08 mm, with a radius of between 0.39 and 0.40 mm for the entran surface and 1.03 and 1.04 mm for the exit surface and in which the index is equal to 1.80 and the Abbe number equal to 25, that said rear optical group (G') comprises a second lens (L'$_2$) which is double convex and which is joined to the preceding double concave lens (L'$_1$), said second lens (L'$_2$) having an index equal to 1.49, an Abbe number equal to 70 and, for an assumed total focal length reduced to 1 mm, a thickness at the centre of between 0.49 and 0.51 mm, and a radius of between 1.03 and 1.04 mm for the entrance surface and 0.71 and 0.72 mm for the exit surface, that said rear optical group (G') comprises a third lens (L'$_3$) which is concave-convex, with its convex surface towards the preceding lens (L'$_2$) and which, for an assumed total focal length reduced to 1 mm, is disposed at a distance from said preceding lens (L'$_2$) of between 0.01 and 0.02 mm, said third lens (L'$_3$) having an index equal to 1.62, an Abbe number equal to 53 and, for said assumed total focal length reduced to 1 mm, a thickness at the centre of between 0.39 and 0.41 mm, and a radius of between 1.62 and 1.63 mm for the entrance surface and 1.28 and 1.29 mm for the exit surface, that said rear optical group (G') comprises a fourth lens (L'$_4$) which is double convex and which, for an assumed total focal length reduced to 1 mm, is disposed at a distance from the preceding lens (L'$_3$) of between 0.01 and 0.02 mm, said fourth lens (L'$_4$) having an index equal to 1.62, an Abbe number equal to 53 and, for said assumed total focal length reduced to 1 mm, a thickness at the centre of between 0.60 and 0.62 mm, and a radius of between 5.08 and 5.14 mm for the entrance surface and 1.65 and 1.66 mm for the exit surface, that said rear optical group (G') comprises a fifth lens (L'$_5$) which is concave-convex, with its convex surface towards the preceding lens (L'$_4$) and which, for an assumed total focal length reduced to 1 mm, is disposed at a distance from said preceding lens (L'$_4$) of between 0, 0.01 mm and 0.02 mm, said fifth lens (L'$_5$) having an index equal to 1.72, an Abbe number equal to 30 and, for said assumed total focal length reduced to 1 mm, a thickness at the centre of between 0.13 and 0.15 mm and a radius of between 3.24 and 3.25 mm for the entrance surface and 0.89 and 0.90 mm for the exit surface, and that said rear optical group (G') comprises a sixth lens (L'$_6$) which, being double convex, is joined to the preceding lens (L'$_5$) and has an index equal to 1.62 and an Abbe number equal to 53, said sixth lens (L'$_6$), for an assumed total focal length reduced to 1 mm, having a thickness at the centre of between 0.97 and 0.99 mm and a radius of between 0.89 and 0.90 mm for the entrance surface and 5.08 and 5.14 mm for the exit surface.

2. An objective according to claim 1 characterised in that a diaphragm (D$_4$) is disposed substantially at mid-distance between the front optical group (G) and the rear optical group (G').

3. An objective according to claim 2 characterised in that, for an assumed total focal length reduced to 1 mm, the useful diameter of said diaphragm (D$_4$) is of the order of 0.25 mm.

4. An objective according to any one of claims 1 to 3 characterised in that, for an assumed total focal length reduced to 1 mm, its focal length, that is to say, the distance separating the rear surface of the rear optical group (G') from the image focal plane (F) is between 1.2 and 1.4 mm.

5. An objective according to any one of claims 1 to 4 characterised in that, for an assumed total focal length reduced to 1 mm, the useful diameter of the entrance pupil (D$_1$) is of the order of 0.26 mm.

6. A viewing apparatus objective of the type comprising a diaphragm (D$_1$) or entrance pupil at the front and an optical assembly rearwardly of said entrance pupil (D$_1$), said optical assembly comprising in combination a front plano-convex optical group (G), with the flat surface towards the front, capable of permitting the objective to function in ambient media with different indices, and a rear optical group (G') capable of producing the corrections necessary to maintain the aberrations within reasonable limits and adjusting the mechanical focal length to a given value, characterised in that its front optical group (G) comprises a single plano-convex lens (L) which has its flat surface towards the front, which is of a thickness at the centre of 1.15 mm and which has a radius of 10.43 mm for its rear surface, and in which the index is equal to 1.45, and its rear optical group (G') successively comprises a first double concave lens (L'$_1$) which is disposed at a distance of 1.86 mm from the preceding lens, which has a thickness at the centre of 0.77 mm and a radius of 4.45 mm for its entrance surface and 11.72 mm for its exit surface and in which the index is equal to 1.80, a second double convex lens (L'$_2$) which is joined to the preceding lens (L'$_1$) and which has a thickness at the centre of 5.65 mm and a radius of 11.72 mm for its entrance surface and 8.01 mm for its exit surface and in which the index is equal to 1.49, a third concave-convex lens (L'$_3$) which is disposed at a distance of 0.19 mm from the preceding lens (L'$_2$), with the concave surface towards the front, which has a thickness at the centre of 4.62 mm and a radius of 18.371 mm for the entrance surface and 14.531 mm for the exit surface and in which the index is equal to 1.62, a fourth double convex lens (L'$_4$) which is disposed at a distance of 0.19 mm from the preceding lens (L'$_3$), which has a thickness at the centre of 6.92 mm and a radius of 57.652 mm for its entrance surface and 18.700 mm for its exit surface and in which the index is equal to 1.62, a fifth concave-convex lens (L'$_5$) which is disposed at a distance of 0.19 mm from the preceding lens (L'$_4$), with the convex surface towards the front, which has a thickness at the centre of 1.54 mm and a radius of 36.623 mm for its entrance surface and 10.110 mm for its exit surface and in which the index is equal to 1.72, and a sixth double convex lens (L'$_6$), joined to the preceding lens (L'$_5$), which has a thickness at the centre of 11 mm and a radius of 10.14 mm for the entrance surface and 57.652 mm for the exit surface and in which the index is equal to 1.62, for a total focal length of 11.27 mm and a mechanical focal length, that is to say, a distance between the rear surface of the rear optical group (G') and the image focal plane (F), of 14.56 mm.

7. An objective according to claim 6 characterised in that the useful diameter of the entrance pupil (D$_1$) is 2.92 mm.